# EUROPÄISCHE PATENTSCHRIFT

(11) **EP 0 428 035 B1**
(45) Veröffentlichungstag und Bekanntmachung des Hinweises auf die Patenterteilung: **08.06.1994**
(21) Anmeldenummer: 90121133.4
(22) Anmeldetag: 05.11.1990
(51) Int. Cl.: H02M 5/27

(54) **Dreiphasen-Direktumrichter**
Three-phase cycloconverter
Cyclo-convertisseur triphasé

(30) Priorität: 13.11.1989 DE 3937739
(43) Veröffentlichungstag der Anmeldung: 22.05.1991
(73) Patentinhaber: SIEMENS AKTIENGESELLSCHAFT, 80333 München (DE)
(72) Erfinder: Hollmann, Rolf, W-8522 Herzogenaurch (DE)

(56) Entgegenhaltungen:
- CH-A- 486 801
- US-A- 3 431 483
- US-A- 3 624 472

## Beschreibung

Die Erfindung betrifft einen Dreiphasen-Direktumrichter für einen Drehstrommotor, mit einem Eingangstransformator, der eine Primärwicklung und eine erste Sekundärwicklung sowie eine zweite Sekundärwicklung aufweist, und mit steuerbaren Leistungshalbleitern, über die die Motorphasen an den Sekundärwicklungen angeschlossen sind.

Dreiphasen-Direktumrichter, die einen Eingangstransformator und nachgeschaltete, gesteuerte Leistungshalbleiter aufweisen, sind in unterschiedlichen Ausführungen bekannt. Eine Übersicht über die unterschiedlichen Ausführungen und ihre Vor- und Nachteile gibt B.R. Pelly in dem Buch "Thyristor Phase-Controlled Converters and Cycloconverters", Verlag WILEY-INTERSCIENCE a Division of John Wiley & Sons, Inc., New York, London, Sydney, Toronto. Die im Betreff genannte Ausführung ist auf Seite 210 mit der Überschrift "Symmetrical Six-Pulse Midpoint Circuit" beschrieben und auf Seite 211 detailliert dargestellt.

Bei einem aus der CH-PS 486 801 bekannten Dreiphasen-Direktumrichter sind die Motorphasen eines Drehstrommotors auf jeder ihrer beiden Anschlußseiten mit jeweils drei von sechs Sekundärwicklungen eines Transformators verbunden. Jede Sekundärwicklung ist über einen Vollweggleichrichter mit dazu parallelem Thyristor in Sternschaltung einschaltbar.

Es ist Aufgabe der Erfindung, einen Direktumrichter derart auszugestalten, daß er gegenüber den bekannten Ausführungen einfacher gestaltet, kleiner und mit höherem Wirkungsgrad, arbeitend, d. h. optimiert, ausgebildet ist.

Die Aufgabe wird erfindungsgemäß dadurch gelöst, daß bei dem Dreiphasen-Direktumrichter der eingangs angegebenen Art jede Motorphase auf einer Anschlußseite über jeweils eine erste Leistungshalbleitergruppe mit der ersten Sekundärwicklung und auf der anderen Anschlußseite jeweils über eine zweite Leistungshalbleitergruppe mit der zweiten Sekundärwicklung verbunden ist. Durch diese Ausbildung, die als wesentlichstes Merkmal die Reihenschaltung der Motorphasen in bezug auf die Leistungshalbleitergruppen beinhaltet, wird überraschend eine nicht unwesentliche Vereinfachung und Verbesserung des als elektrotechnische Einheit anzusehenden Systems Transformator - Halbleiter - Motorwicklungen erreicht. In diesem Fall ist der Übergang von einer bekannten Parallelanordnung zu einer Reihen anordnung kein ohne weiteres austauschbares Mittel, da sich in bezug auf die Motorphasen eine offene Schaltung ergibt. Die Motorphasen besitzen keinen tatsächlichen, sondern nur einen virtuellen Sternpunkt und sind lediglich auf dem Umweg über die Leistungshalbleiter, die entsprechend geschaltet werden, in dem als Einheit auszubildenden Sekundärspulenteil des Eingangstransformators miteinander verbunden. Damit ergibt sich, daß durch die Reihenanordnung überraschenderweise gegenüber der Parallelanordnung nicht unerhebliche, im Sinne einer Optimierung wirkende, Vorteile erreichbar sind. Gleichzeitig ergibt sich noch der Vorteil, daß die Spannung im Umrichter gegenüber einer Parallelschaltung verdoppelt wird. Obwohl sich die Betriebsspannung des Motors verdoppelt hat, können vorteilhaft die kostengünstigen Impulsüberträger, Thyristoren etc. der bekannten Schaltung verwendet werden. Die Saugdrosseln der bekannten Schaltung sind besonders vorteilhaft nicht mehr erforderlich.

In Ausgestaltung der Erfindung ist vorgesehen, daß die Leistungshalbleitergruppen eine Steuerung aufweisen, die zusammenarbeitende Halbleiter überlappend ansteuert. Hierdurch ist besonders vorteilhaft ein Umsteuern möglich, das keine Totzeit bei der Stromumkehr aufweist und keiner Sperrspannungserfassung je Phase bedarf. Das System ist auch nicht zwangsläufig gleichstrombehaftet, so daß in weiterhin kostengünstiger Vereinfachung auf entsprechende Sperren verzichtet werden kann.

Für die Steuerung der Halbleiter ist es vorteilhaft, wenn die Überlappung durch Ansteuern des jeweiligen Leistungshalbleiters vor dem errechneten Nulldurchgang des Stromes erfolgt und der Leistungshalbleiter anschließend einschaltbereit gehalten wird.

Die vorstehende Erfindung mit ihrer offenen Direktumrichterschaltung entspricht nicht der bewährten Phasenschaltung mit Sternpunkt im Drehstrommotor. Es hat sich jedoch gezeigt, daß das Fehlen des Sternpunkts bei geeigneter Steuerung nicht nachteilig ist.

Weitere Vorteile und Einzelheiten der Erfindung ergeben sich aus der nachfolgenden Beschreibung von Ausführungsbeispielen anhand der Zeichnung und in Verbindung mit den Unteransprüchen.

Es zeigen:
- FIG 1: eine erfindungsgemäße, einfache Direktumrichter-Schaltung,
- FIG 2: eine Darstellung der Phasenanordnung im Motor,
- FIG 3: eine 2x3 Pulsschaltung in vereinfachter Darstellung,
- FIG 4: einen Umrichter in 4x3 Pulsschaltung,
- FIG 5: einen Umrichter in 6x3 Pulsschaltung,
- FIG 6: eine Saugdrossel für eine 4x3 Pulsschaltung und
- FIG 7: eine Saugdrossel für eine 6x3 Pulsschaltung in 3-Schenkelausführung.

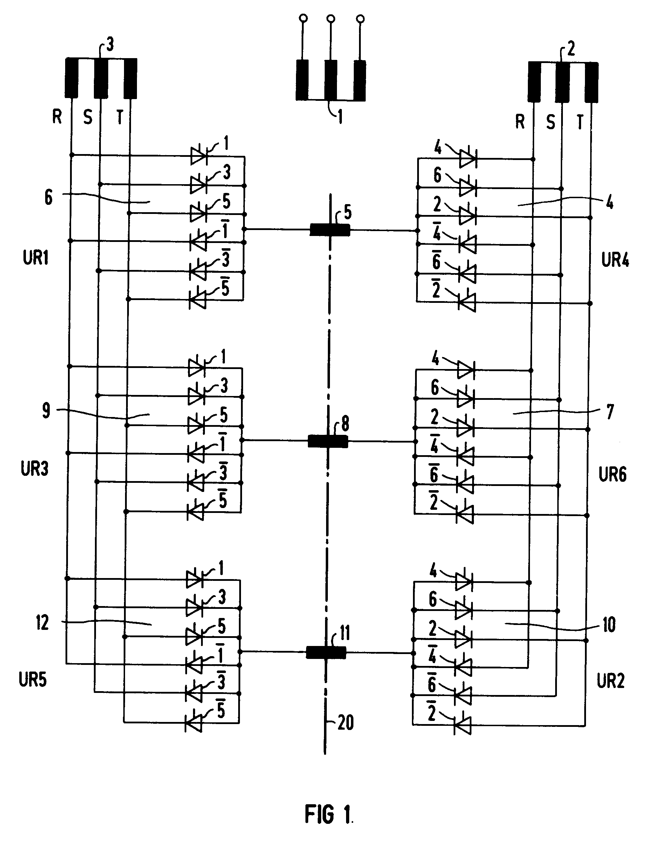

In FIG 1 bezeichnet 1 die Primärwicklung des Eingangstransformators und 2 und 3 eine erste und zweite Sekundärwicklung. Die Sekundärwicklungen 2 und 3 sind vorzugsweise ineinander verschachtelt in Form einer Spule gewickelt. So ergibt sich hier eine besonders klein bauende Eingangseinheit.

Jeweils an die einzelnen Phasen der Sekundärwicklungen 2 und 3 sind Leistungshalbleitergruppen 4, 6, 7, 9, 10 und 12, d.h. die Thyristoren des Umrichters angeschlossen. Die Leistungshalbleitergruppen 4, 6, 7, 9, 10 und 12 weisen in bekannter Weise jeweils eine Sternschaltung auf. Die Sternpunkte der Leistungshalbleitergruppen 4, 6, 7, 9, 10 und 12 sind mit den Phasen 5, 8 und 11 eines Drehstrommotors verbunden. Der nicht dargestellte Motor ist symbolisch durch die strichlierte Linie 20 gekennzeichnet, die die Phasen 5, 8 und 11 miteinander verbindet.

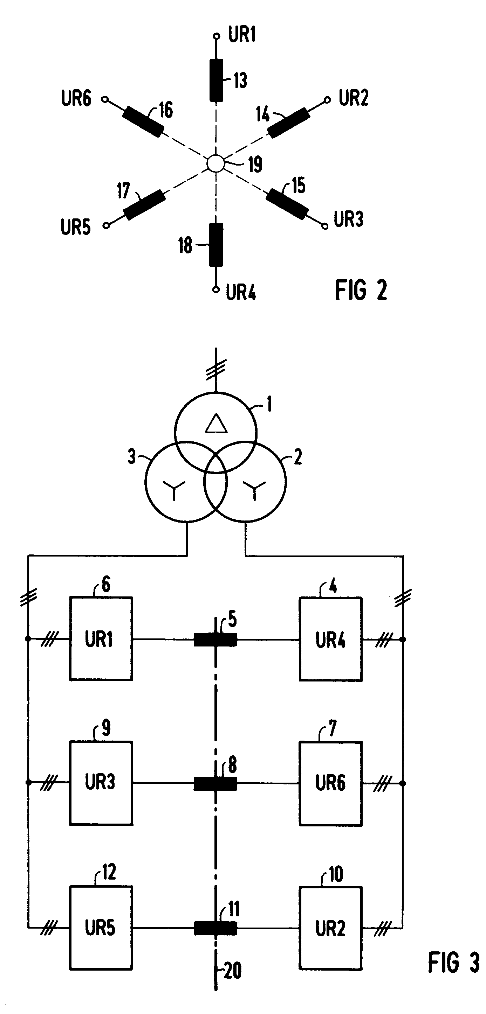

In FIG 2 ist die Phasenlage im Motor ersichtlich, wobei die einzelnen Wicklungen mit 13 - 18 bezeichnet sind, während der nur virtuelle Sternpunkt der Wirkanordnung die Bezeichnung 19 trägt. Wie ersichtlich, ergibt sich eine vollkommen symmetrische, offene Konfiguration.

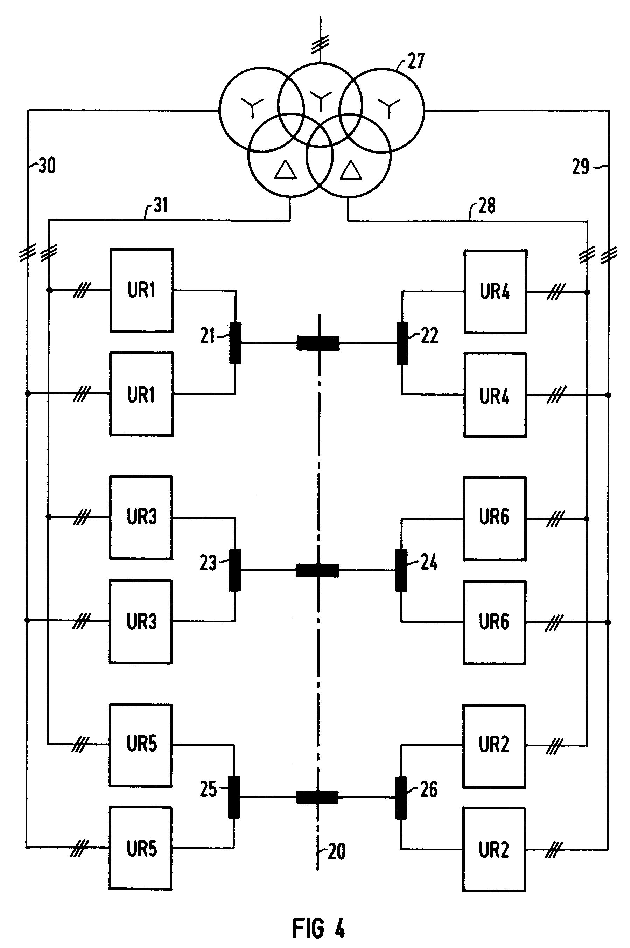

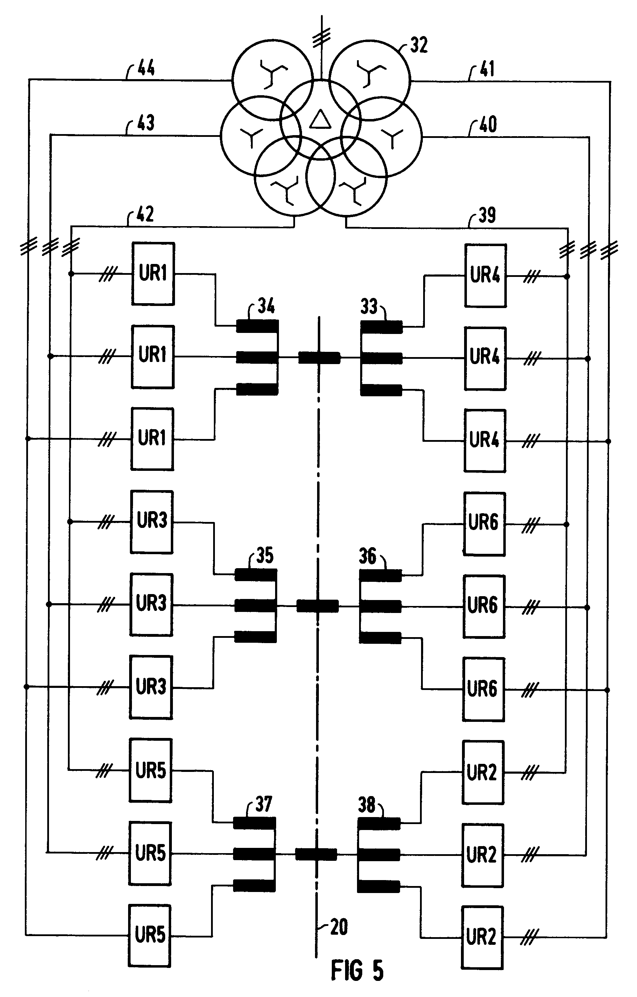

In FIG 3 ist die Schaltung gemäß FIG 1 in vereinfachter Form dargestellt. Die einzelnen Bezugszeichen sind dabei den gleichen Komponenten wie in FIG 1 zugeteilt. Diese Blockdarstellung wiederholt sich bezüglich ihrer Symbole in den FIG 4 und 5.

In FIG 4, die eine ebenfalls offene 4x3 Pulsschaltung zeigt, ist der Eingangstransformator 27 vorzugsweise als 2-Stock-Transformator ausgebildet. An ihm sind die beiden Schaltungshälften mit der Verdrahtung 28, 29 bzw. 30, 31 angeschlossen, die in Saugdrosseln 21 bis 26 zusammengeführt sind. So ergibt sich eine Auftrennung der Drehstrombrücke in zwei Teile. Jedes Teil ist an eine andere Trafowicklung, jedoch mit gleicher Phasenlage, angeschlossen. Die Leistungshalbleitergruppen jeder Motorphase werden ebenso wie bei der 2x3 Pulsschaltung, die in FIG 1 dargestellt ist, mit überlappenden Zündimpulsen angesteuert. Die einzelnen Leistungshalbleitergruppen sind über Saugdrosseln 21 bis 26 paarweise miteinander verbunden. Die Ausführung nach FIG 4 ist besonders vorteilhaft, wenn die Einbauverhältnisse für den Trafo beengt sind. Es ist eine Verkleinerung der Trafobaugröße erreichbar. Die Spannungsbeanspruchung der Bauteile kann ebenfalls geringer sein. Insgesamt ergibt sich eine weitere, u.U. sehr vorteilhafte Verkleinerung.

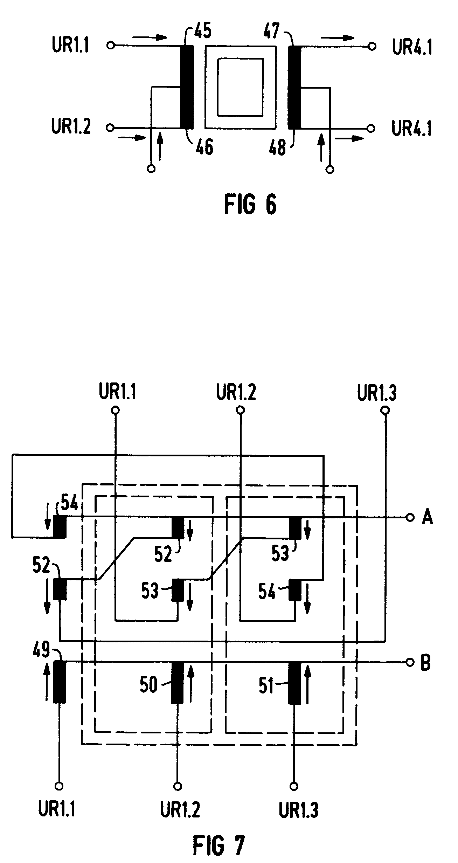

In der gleichen Richtung wirken die Vorteile, die sich bei der Schaltung gemäß FIG 5 ergeben. Bei dieser Ausgestaltung ist der Eingangstransformator 32 vorzugsweise als 3-Stock-Trafo ausgebildet. Die Leiter 39 bis 44 verbinden die Leistungshalbleitergruppen mit den Sekundärwicklungen des Transformators 32. Die Sternpunkte der Saugdrosseln 33 bis 38, die als Dreischenkeldrosseln entsprechend FIG 7 ausgeführt sind, sind ebenfalls mit den Motorphasen verbunden.

Die in den FIG 4 und 5 gezeigten Saugdrosseln sind in ihrer Schaltung in den FIG 6 und 7 näher erläutert. Wie ersichtlich, ergeben sich symmetrische Stromflüsse der einzelnen Spulen 45, 46 und 47, 48 gemäß FIG 6 bzw. 49, 50, 51 und 52, 53, 54 gemäß FIG 7. Ausgangsseitig sind die Motorphasen in Reihe mit den Saugdrosseln geschaltet.

Die höherpulsigen Schaltungen (z.B. 4x3-Puls, 6x3-Puls usw.) sind mit relativ geringem Mehraufwand bei Vorhandensein von entsprechenden Steuersätzen, die aus Standardbauteilen gebildet werden können, zu realisieren. Sie erlauben den Betrieb mit wesentlich höheren Ausgangsfrequenzen als bisher, wobei die fehlende Totzeit bei der Stromumkehr besonders vorteilhaft ist. Der Mehraufwand bei solchen Schaltungen für höhere Ausgangsfrequenzen ist überraschenderweise nicht hoch, da die Baugröße der Transformatoren in bezug auf die Leistung des Direktumrichters relativ kleiner ist. Von besonderem Vorteil ist es bei allen Schaltungen, daß bei Vorhandensein geeigneter Schnellschalter auf Sicherungen verzichtet werden kann, ohne die Halbleiter unnötig überdimensionieren zu müssen.

## Patentansprüche

1. Dreiphasen-Direktumrichter für einen Drehstrommotor, mit einem Eingangstransformator, der eine Primärwicklung (1) und eine erste Sekundärwicklung (2) sowie eine zweite Sekundärwicklung (3) aufweist, und mit steuerbaren Leistungshalbleitern, über die die Motorphasen (5, 8, 11) an den Sekundärwicklungen (2, 3) angeschlossen sind,
**dadurch gekennzeichnet**,
daß jede Motorphase (z. B. 5) auf einer Anschlußseite über jeweils eine erste Leistungshalbleitergruppe (4) mit der ersten Sekundärwicklung (2) und auf der anderen Anschlußseite jeweils über eine zweite Leistungshalbleitergruppe (6) mit der zweiten Sekundärwicklung (3) verbunden ist (FIG 1, 3).

2. Dreiphasen-Direktumrichter nach Anspruch 1,
**dadurch gekennzeichnet**,
daß der Eingangstransformator (27) eine dritte und vierte Sekundärwicklung aufweist und daß jede Motorphase auf der einen Anschlußseite über eine dritte Leistungshalbleitergruppe mit der dritten Sekundärwicklung und auf der anderen Anschlußseite über eine vierte Leistungshalbleitergruppe mit der vierten Sekundärwicklung verbunden ist, wobei die jeweils mit einer Anschlußseite einer Motorphase verbundenen Leistungshalbleitergruppen über eine Saugdrossel (21-26) an der Motorphase angeschlossen sind (FIG 4).

3. Dreiphasen-Direktumrichter nach Anspruch 2,
**dadurch gekennzeichnet**,
daß der Eingangstransformator (32) eine fünfte und sechste Sekundärwicklung aufweist und daß jede Motorphase auf der einen Anschlußseite über eine fünfte Leistungshalbleitergruppe mit der fünften Sekundärwicklung und auf der anderen Anschlußseite über eine sechste Leistungshalbleitergruppe mit der sechsten Sekundärwicklung verbunden ist (FIG 5).

4. Dreiphasen-Direktumrichter nach Anspruch 2 oder 3,
**dadurch gekennzeichnet**,
daß die Saugdrosseln (21-26, 33-38) als Zwei- oder Dreischenkeldrosseln ausgebildet sind.

5. Dreiphasen-Direktumrichter nach einem der vorangehenden Ansprüche,
**dadurch gekennzeichnet**,
daß die Sekundärwicklungen ineinander verschachtelt in Form einer Spule gewickelt sind.

6. Dreiphasen-Direktumrichter nach einem der vorangehenden Ansprüche,
**dadurch gekennzeichnet**,
daß die Leistungshalbleitergruppen (4, 6, 7, 9, 10, 12) jeweils eine Steuerung aufweisen, die zusammenarbeitende Leistungshalbleiter überlappend ansteuert.

7. Dreiphasen-Direktumrichter nach Anspruch 6,
**dadurch gekennzeichnet**,
daß die Überlappung durch Ansteuern des jeweiligen Leistungshalbleiters vor dem errechneten Nulldurchgang des Stromes erfolgt und der Leistungshalbleiter anschließend einschaltbereit gehalten wird.

## Claims

1. Three-phase direct converter for a three-phase motor, having an input transformer which has a primary winding (1) and a first secondary winding (2) and also a second secondary winding (3) and having controllable power semiconductors by way of which the motor phases (5, 8, 11) are connected to the secondary windings (2, 3), characterised in that each motor phase (for example 5) is linked on one connection side to the first secondary winding (2) by way of, in each case, a first power semiconductor group (4) and is linked on the other connection side to the second secondary winding (3) in each case by way of a second power semiconductor group (6) (Figures 1, 3).

2. Three-phase direct converter according to claim 1, characterized in that the input transformer (27) has a third and fourth secondary winding and in that each motor phase is linked on the one connection side to the third secondary winding by way of a third power semiconductor group and is linked on the other connection side to the fourth secondary winding by way of a fourth power semiconductor group, in which case the power semiconductor groups respectively linked to one connection side of a motor phase are connected to the motor phase by way of an interphase reactor (21-26) (Figure 4).

3. Three-phase direct converter according to claim 2, characterised in that the input transformer (32) has a fifth and sixth secondary winding and in that each motor phase is linked on the one connection side to the fifth secondary winding by way of a fifth power semiconductor group and is linked on the other connection side to the sixth secondary winding by way of a sixth power semiconductor group (Figure 5).

4. Three-phase direct converter according to claim 2 or 3, characterized in that the interphase reactors (21-26, 33-38) are formed as two- or three-limb reactors.

5. Three-phase direct converter according to one of the preceding claims, characterized in that the secondary windings, banked inside each other, are wound in the form of a coil.

6. Three-phase direct converter according to one of the preceding claims, characterised in that the power semiconductor groups (4, 6, 7, 9, 10, 12) each have a control which activates cooperating power semiconductors in an overlapping manner.

7. Three-phase direct converter according to claim 6, characterized in that the overlapping is effected by activating the respective power semiconductor before the calculated current zero crossing and the power semiconductor is subsequently kept ready to be turned on.

## Revendications

1. Cycloconvertisseur triphasé pour un moteur à courant triphasé comportant un transformateur d'entrée qui possède un enroulement primaire (1) et un premier enroulement secondaire (2) ainsi qu'un second enroulement secondaire (3), et des semiconducteurs de puissance commandables, au moyen desquels les phases (5, 8, 11) du moteur sont raccordées aux enroulements secondaires (2, 3), caractérisé par le fait que chaque phase (par exemple 5) du moteur est raccordée à un côté de raccordement, par l'intermédiaire respectivement d'un premier groupe de semiconducteurs de puissance (4), au premier enroulement secondaire (2) et, sur l'autre côté de raccordement, respectivement par l'intermédiaire d'un second groupe de semiconducteurs de puissance (6), au second enroulement secondaire (3) (figures 1, 3).

2. Cycloconvertisseur triphasé suivant la revendication 1, caractérisé par le fait que le transformateur d'entrée (27) possède des troisième et quatrième enroulements secondaires, que chaque phase du moteur est raccordée, sur un côté de raccordement, par l'intermédiaire d'un troisième groupe de semiconducteurs de puissance, au troisième enroulement secondaire et, sur l'autre côté de raccordement, par l'intermédiaire d'un quatrième groupe de semiconducteurs de puissance, au quatrième enroulement secondaire, les groupes de semiconducteurs de puissance, qui sont reliés respectivement à un côté de raccordement d'une phase du moteur étant raccordés à la phase du moteur par l'intermédiaire d'une bobine d'absorption (21-26) (figure 4).

3. Cycloconvertisseur triphasé suivant la revendication 2, caractérisé par le fait que le transformateur d'entrée (32) possède des cinquième et sixième enroulements secondaires, et que chaque phase du moteur est raccordée, sur un côté de raccordement, par l'intermédiaire d'un cinquième groupe de semiconducteurs de puissance, au cinquième enroulement secondaire et, sur l'autre côté de raccordement, par l'intermédiaire d'un sixième groupe de semiconducteurs de puissance, au sixième enroulement secondaire (figure 5).

4. Cycloconvertisseur triphasé suivant la revendication 2 ou 3, caractérisé par le fait que les bobines d'absorption (21-26, 33-38) sont réalisées sous la forme de bobines à deux branches ou à trois branches.

5. Cycloconvertisseur triphasé suivant l'une des revendications précédentes, caractérisé par le fait que les enroulements secondaires sont enroulés en étant imbriqués entre eux sous la forme d'une bobine.

6. Cycloconvertisseur triphasé suivant l'une des revendications précédentes, caractérisé par le fait que les groupes de semiconducteurs de puissance (4, 6, 7, 9, 10, 12) possèdent chacun une unité de commande, qui commande en chevauchement des semiconducteurs de puissance qui coopèrent entre eux.

7. Cycloconvertisseur triphasé suivant la revendication 6, caractérisé par le fait que le chevauchement obtenu sous l'effet de la commande du semiconducteur de puissance respectif, s'effectue avant le passage par zéro calculé du courant et que le semiconducteur de puissance est ensuite maintenu à l'état prêt pour son activation.
